Europäisches Patentamt

European Patent Office

Office européen des brevets

(19)

(11) Publication number : **0 345 696 B1**

## (12) EUROPEAN PATENT SPECIFICATION

(45) Date of publication of patent specification :
16.08.95 Bulletin 95/33

(51) Int. Cl.⁶ : **G11B 11/03, G11B 11/08,**
// **G11B21/21**

(21) Application number : **89110142.0**

(22) Date of filing : **05.06.89**

(54) **Data reproducing system.**

(30) Priority : **07.06.88 JP 141063/88**

(43) Date of publication of application :
**13.12.89 Bulletin 89/50**

(45) Publication of the grant of the patent :
**16.08.95 Bulletin 95/33**

(84) Designated Contracting States :
**DE FR GB**

(56) References cited :
**EP-A- 0 174 860**
**EP-A- 0 325 056**
**GB-A- 2 182 480**
**JP-A-63 096 756**
**US-A- 4 575 822**
**PATENT ABSTRACTS OF JAPAN vol. 6, no.
203 (P-148)(1081) 14 October 1982, & JP-A-57
109141**
**PATENT ABSTRACTS OF JAPAN vol. 4, no. 1
(E-163)(85) 08 January 1980, & JP-A-54 141618**

(73) Proprietor : **MITSUBISHI DENKI KABUSHIKI
KAISHA
2-2-3, Marunouchi
Chiyoda-ku Tokyo (JP)**

(72) Inventor : **Tadokoro, Michihiro c/o Mitsubishi
Denki
Itamiseisakusho, 1-1, Tsukaguchi Honmachi
8-chome
Amagasaki - shi Hyogo-ken (JP)**
Inventor : **Okada, Kazuo c/o Mitsubishi Denki
Itamiseisakusho, 1-1, Tsukaguchi Honmachi
8-chome
Amagasaki - shi Hyogo-ken (JP)**

(74) Representative : **Goddar, Heinz J., Dr. et al
FORRESTER & BOEHMERT
Franz-Joseph-Strasse 38
D-80801 München (DE)**

EP 0 345 696 B1

## Description

This invention relates to a data reproducing system comprising an electrically conductive data carrier with data recorded thereon in terms of difference in level of the data carrier surface, as known from GB-A-2182480.

JP-A-57109 141 discloses a device with a conductive head connected to one output of the recorded signal voltage, wherein a conductive turn table is connected to another output of the voltage.

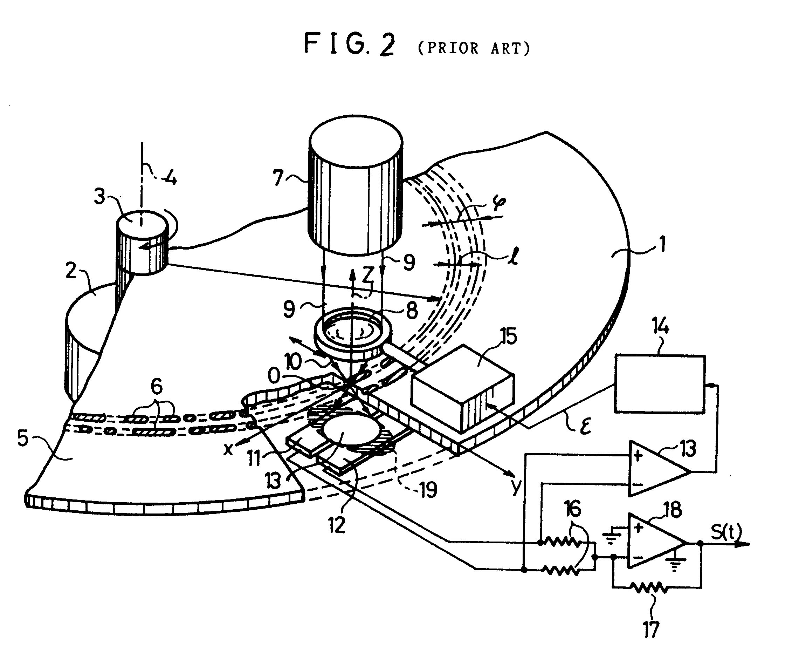

Fig. 2 is a view showing a prior art optical data reproducing system disclosed in Japanese Patent Disclosure 49-60,702. Referring to the Figure, reference numeral 1 designates a data carrier disk called CD, which is rotatable about an axis by a shaft 3 mechanically coupled to a motor 2. The top surface 5 of the data carrier 1, which is parallel to plane xoy, is smooth and has a helically continuous row of diffraction elements 6 in the form of raised and depressed portions. Each diffraction element 6 has a profile slightly spread in the plane of the top surface 5, and its width is substantially fixed and never exceeds 2 μm. It may be in the form of a shallow groove or a protuberance formed in or on the top surface 5. The data carrier 1 is transparent and permits data reproduction by light transmitted through it as described later. Reference numeral 7 designates a light source 7 generating a light flux or beam 9 parallel to the axis oz. Reference numeral 8 designates an objective lens which focuses the light beam 9 on a point 0 on the data carrier 1. On the point 0, the light beam is in a minimum diameter state, i.e., in-focus state with a diameter of substantially about 1 μm. The light beam 10 which is converged toward the point 0 is diverged after passing through the point 0 to be transmitted through the data carrier 1 and illuminate a light incidence surface area 13 of two juxtaposed photosensors 11 and 12. A division line of the photosensors 11 and 12 perpendicularly crosses the axis oz and is parallel to the axis ox.

The output signals from the photosensors 11 and 12 are fed to a differential amplifier 13. The output of the differential amplifier 13 is fed to a low-pass filter 14. The output ε of the low-pass filter 14 operates an actuator 15 to control displacement of the objective lens 8 in the oy axis direction. The outputs of the photosensors 11 and 12 are converted through resistors 16 and 17 and an operational amplifier 18 into a signal S(t) which is proportional to the sum of the signals of the two photosensors 11 and 12.

Now, the operation will be described. Referring to Fig. 2, when the in-focus point 0 of the light beam 10 is on the top surface 5 of the data carrier 1 between two consequtive diffraction elements 6, there is no diffraction, and the optical energy input to the photosensors 11 and 12 is confined in the area 13.

When the in-focus point 0 of the light beam 10 is on a diffraction element 6 on the data carrier 1, the light beam 10 is diffracted. In this case, the optical energy is spread over a shaded area 19 which is substantially broader than the area 13. As a result, a change is produced in the sum S(t) of the signals from the two photosensors 11 and 12.

As is shown, the signal S(t) can be obtained as a pulse period modulation based on whether the light beam is on a diffraction element 6. In this way, it is possible to reproduce data on the data carrier 1.

With the above construction of the prior art data reproducing system, the size of the diffraction elements 6 is substantially equal to the in-focus diameter of the light beam incident on the elements and mathematically given substantially as λ/NA, where λ is the wavelength of the light source and NA is the numerical aperture of the objective lens. Thus, by setting NA = 0.5 and λ = 800 nm, the light beam diameter is substantially about 1 μm. Hence, the size of the diffraction elements is substantially 1 μm. In order to increase the data recording density of the data carrier, it is necessary to reduce the size of the diffraction elements. In addition, it is necessary to reduce the in-focus diameter of the light beam incident on the diffraction elements.

However, the wavelength of the light source such as a semiconductor laser is not so small, and its lower limit is thought to be 400 to 50 nm. In addition, the numerical aperture of the objective lens can not be greater than unity. Therefore, if the numerical number can be set close to unity, the in-focus light beam diameter may be reduced only about one-fourth. Even in such a case, the data recording density on the data carrier is 1 to 4 kbit/mm as line density assuming that one diffraction element is one bit, and it is difficult to obtain further density increase.

A primary object of the invention is to provide a data reproducing system, which permits increase of the data recording density.

Another object of the invention is to provide a data reproducing system, which permits accurate control of the distance between a data carrier for recording data thereon and a probe for reading out data.

According to the invention this object is solved by the features of claim 1. Preferred embodiments of the invention are subject matter of sub-claims 2 to 4.

The above and other objects, features and advantages of the invention will become more apparent from the following description when taken in conjunction with the accompanying drawings.

Fig. 1 is a schematic representation of a first embodiment of the data reproducing system according to the invention; and

Fig. 2 is a schematic representation of a prior art data reproducing system.

In the Figures, reference numeral 20 designates a data carrier, 22 recording element, 23 stylus, 25, 27 operational amplifier, 26 piezoelectric element (drive means), and 28 a low-pass filter.

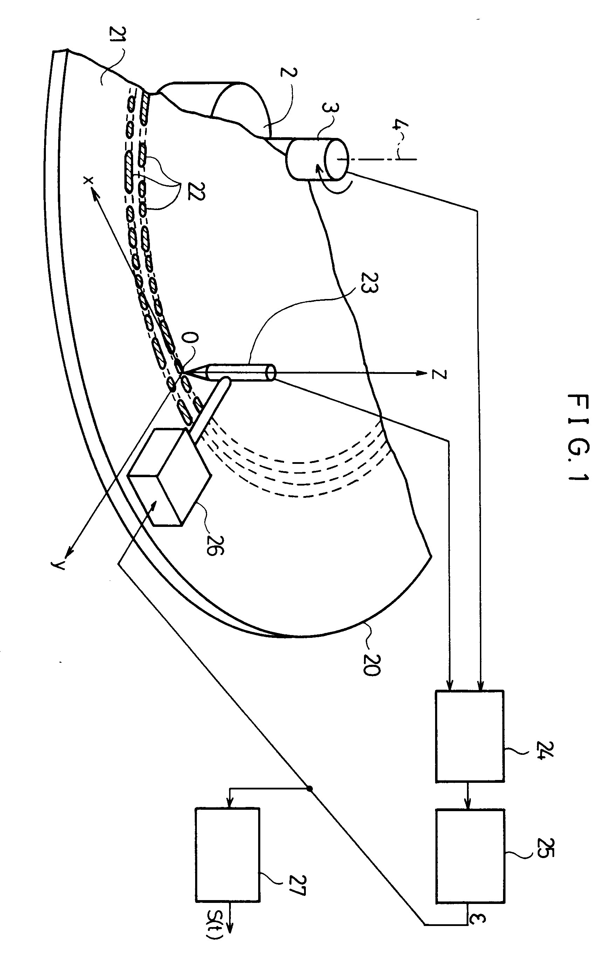

Now, one embodiment of the invention will be described with reference to Fig. 1. Referring to the Figure, reference numeral 20 designates an electrically conductive data carrier disk. The carrier disk 20 is rotatable about an axis 4 by a shaft 3 mechanically coupled to a motor 2. The data carrier 20 and shaft 3 are electrically coupled to each other. The top surface 21 of the data carrier 20 is parallel to plane oxy and is smooth. The top surface 21 of the data carrier 20 has a helical row of recording elements in the form of recesses or raised portions. The recording elements 22 may be formed by means of electronic beam recording, and they can be mass-production copied from a master disk by utilizing replication techniques. The size of the recording elements 22 is typically of the order 100 pm. Reference numeral 23 designates an electrically conductive stylus. The distance between the tip of the stylus 23 and the top surface 21 is held to be substantially 1 nm. A voltage V lower than the work function is applied between the stylus 23 and data carrier 20.

The current passed between the stylus 23 and data carrier 20 is coupled through the shaft 3 to a current-to-voltage converter 24. The output of the current-to-voltage 24 is supplied to an operational amplifier 25, the output $\varepsilon$ of which is used to operate a piezoelectric element 26 so as to drive the stylus 23 in the oz axis direction. The output $\varepsilon$ of the operational amplifier 25 is converted by an operational amplifier 27 into a signal S(t) which is proportional to the displacement of the piezoelectric element 26.

The operation of this embodiment will now be described. Energetically, electrons in a solid are in a potential well of the work function level. However, the wave function of the electrons in the solid is exponentially outwardly attenuating and is spread to the order of nm into the barrier. Thus, two electric conductors of approach each other to an extent of the size of an atom, electrons in two solids can be mutually transferred. Thus phenomenon is called tunnel effect. When a voltage V lower than the work function $\phi$ of applied between two metal pieces spaced apart by a distance z, electrons clear the potential barrier. At this time, the current density $J_T$, assuming free electrons, is given as

$$J_T = (\beta V/2\pi\lambda Z)\exp(-2Z/\lambda) \quad (1)$$

where Z is the distance between the two electric conductors, V is a voltage lower than the work function $\phi$, $\lambda = h/2\pi\sqrt{2m\phi}$ representing the attenuation factor in vacuum or atmosphere outside the metal of the wave function, h is a Planck constant, m is the mass of an electron, $\phi$ is the work function, $\beta$ is $e^2/h$ where e is the charge of an electron and represents a conductance constant (inverse to the quantum hole resistance) independent of the kind of metal.

On the clean surface of an ordinary metal, the work function $\phi$ is 1 to 5 eV, so that $\lambda$ is 0.1 to 0.2 nm.

When two metal pieces with $\phi$ of 5 eV approach each other so that the distance between them is 1 nm, the tunnel current is approximately 1 nA, and the current value is changed by about one place with a change in the distance by 0.1 nm.

The data reproducing system according to the invention utilizes the characters described above. The distance between the stylus 23 and top surface 21 of the data carrier 20 in Fig. 1 is set to be approximately 1 nm. The tunnel current between the stylus 23 and data carrier 20 is changed as an exponential function of the distance between the two. The distance can be held constant by controlling the voltage applied to the piezoelectric element 26 through the current-to-voltage converter 24 and operational amplifier 25 such as to hold the tunnel current constant. In this state, the stylus 23 is scanned over the helical row of recording elements 22. Where the recording elements 22 are in the form of recesses, the stylus 23 is displaced downwardly by the piezoelectric element 26 when it is over each recording element 22 to hold the tunnel current constant. Where the recording elements 22 are in the form of raised portions, the stylus 23 is displaced upwardly by the piezoelectric element 26.

This means that with processing of the signal applied to the piezoelectric element 26 through the operational amplifier 27, the signal on the data carrier 20 can be reproduced as signal s(t) as pulse period modulation according to whether or not the stylus 23 is on the recording element 22.

The resolution of the system shown in Fig. 1 is typically about 100 pm in a direction of the surface (i.e., xoy plane) and about 1 pm in the vertical direction (i.e., oz axis direction). Thus, compared to the prior art recording density of 1 $\mu$m, the line recording density can be increased by $10^4$ times, and the plane recording density by $10^8$ times.

**Claims**

1. Data reproducing system comprising an electrically conductive data carrier (20) with data recorded thereon in terms of difference in level of the data carrier surface (21),
   - an electrically conductive stylus (23) disposed such that a tunnel current flows between said stylus (23) and said data carrier (20),
   - drive means (26) for controlling the distance between said stylus (23) and said data carrier (20) according to a control signal ($\varepsilon$), and
   - a first operational circuit means (25) receiving at its input a signal, which is indicative of said tunnel current for providing said control signal to said drive means (26) such as to hold said tunnel current constant,
- a second operation circuit (27) for taking out data recorded on said data carrier by processing an electrical signal being indicative of said data,

characterized in that
- an electrically conductive rotary shaft (3) is mechanically coupled to the data carrier (20) and constitutes an axis for rotational movement of the data carrier (20),
- the stylus (23) is controlled by a first operational circuit (25) and the drive means (26) to move in accordance with level differences generated by the provision of recording elements (22) on the data carrier (20), so that tunnel current flowing between the stylus (23) and the data carrier (20) is maintained constant, and
- said electrical signal is said control signal ($\varepsilon$).

2. The data reproducing system according to claim 1, characterized in that said drive means (26) consists of a piezo-electric element.

3. The data reproducing system according to claim 1, characterized in that said data carrier (20) consists of a disk having a surface formed with raised or recessed portions.

4. The data reproducing system according to claim 1, wherein said first and second operational circuits (25, 27) consist of respective operational amplifiers.

**Patentansprüche**

1. Datenwiedergabesystem mit einem elektrisch leitenden Datenträger (20) mit darauf aufgezeichneten Daten in Form von Niveauunterschieden der Datenträgeroberfläche (21),
- einer elektrisch leitenden Nadel (23), die so angeordnet ist, daß ein Tunnelstrom zwischen der Nadel (23) und dem Datenträger (20) fließt,
- Antriebsmittel (26) zum Steuern der Entfernung zwischen der Nadel (23) und dem Datenträger (20) nach einem Steuersignal ($\varepsilon$), und
- einem ersten Operationsschaltkreismittel (25), das als Eingabe ein Signal empfängt, das dem Tunnelstrom entspricht, um ein Steuersignal an die Antriebsmittel (26) zu geben, um so den Tunnelstrom konstant zu halten,
- einem zweiten Operationsschaltkreis (27) zur Ausfilterung von Daten, die auf dem Datenträger aufgezeichnet sind, durch Bearbeitung eines elektrischen Signals, das diese Daten wiedergibt,

dadurch gekennzeichnet, daß
- eine elektrisch leitende, drehbare Welle (3) mechanisch mit dem Datenträger (20) verbunden ist und eine Achse für die Drehbewegung des Datenträgers (20) darstellt,
- die Nadel (23) durch einen ersten Operationsschaltkreis (25) gesteuert wird, und die Antriebsmittel (26) in Übereinstimmung mit Niveaudifferenzen, die durch die Vorsehung von Aufzeichnungselementen (22) auf dem Datenträger (20) erzeugt werden, bewegt sind, so daß der Tunnelstrom, der zwischen der Nadel (23) und dem Datenträger (20) fließt, konstant gehalten wird, und
- das elektrische Signal dieses Kontrollsignal ($\varepsilon$) darstellt.

2. Datenwiedergabesystem nach Anspruch 1, dadurch gekennzeichnet, daß die Antriebswelle (26) aus einem piezo-elektrischen Element besteht.

3. Datenwiedergabesystem nach Anspruch 1, dadurch gekennzeichnet, daß der Datenträger (20) aus einer Scheibe besteht, die eine Oberfläche besitzt, die mit erhabenen und vertieften Abschnitten gebildet ist.

4. Datenwiedergabesystem nach Anspruch 1, wobei die ersten und zweiten Operationsschaltkreise (25, 27) aus entsprechenden Operationsverstärkern bestehen.

**Revendications**

1. Système de reproduction de données comprenant un support de données (20) conducteur de l'électricité comportant des données enregistrées en termes de différence de niveau de la surface support de données (21),
- un palpeur (23) conducteur de l'électricité, disposé de manière qu'un courant tunnel s'écoule entre ledit palpeur (23) et ledit support de données (20),
- un moyen de commande (26) pour commander la distance entre ledit palpeur (23) et ledit support de données (20) en fonction d'un signal de commande ($\varepsilon$), et
- un premier moyen formant circuit fonctionnel (25) recevant un signal à son entrée, indicatif dudit courant tunnel pour fournir ledit signal de commande audit moyen de commande (26), de manière à maintenir constant ledit courant tunnel,

- un deuxième circuit fonctionnel (27) pour extraire des données enregistrées sur ledit support de données en traitant un signal électrique indicatif desdites données, caractérisé en ce que

- un arbre rotatif (3) conducteur de l'électricité est couplé mécaniquement au support de données (20) et constitue un axe de déplacement rotatif du support de données (20),
- le palpeur (23) est commandé par un premier circuit fonctionnel (25) et le moyen de commande (26) pour se déplacer en fonction de différences de niveau produites par l'existence d'éléments d'enregistrement (22) sur le support de données (20), de manière qu'un courant tunnel s'écoulant entre le palpeur (23) et le support de données (20) soit maintenu constant, et
- le signal électrique est ledit signal de commande (ε).

2. Système de reproduction de données selon la revendication 1, caractérisé en ce que ledit moyen d'entraînement (26) consiste en un élément piézo-électrique.

3. Système de reproduction de données selon la revendication 1, caractérisé en ce que ledit support de données (20) consiste en un disque ayant une surface formée avec des parties surélevées ou creusées.

4. Système de reproduction de données selon la revendication 1, dans lequel lesdits premier et deuxième circuits fonctionnels (25, 27) consistent en des amplificateurs opérationnels respectifs.

FIG.1

F I G. 2 (PRIOR ART)